# EUROPÄISCHE PATENTSCHRIFT

(11) **EP 2 212 862 B1**
(45) Veröffentlichungstag und Bekanntmachung des Hinweises auf die Patenterteilung: **08.06.2011**
(21) Anmeldenummer: 08852175.2
(22) Anmeldetag: 20.11.2008
(51) Int. Cl.: G07C 9/00, E05B 49/00, B60R 25/00

(54) **SCHLÜSSELSCHALTER ZUM EINBAU IN EINE FAHREINRICHTUNG UND VERFAHREN ZUM BEDIENEN DES SCHLÜSSELSCHALTERS**
KEY SWITCH FOR INSTALLATION IN A DRIVE DEVICE AND METHOD FOR OPERATING THE KEY SWITCH
INTERRUPTEUR À CLÉ DEVANT ÊTRE MONTÉ DANS UN DISPOSITIF DE CONDUITE ET PROCÉDÉ D'UTILISATION DE L'INTERRUPTEUR À CLÉ

(30) Priorität: 23.11.2007 EP 07121464
(43) Veröffentlichungstag der Anmeldung: 04.08.2010
(73) Patentinhaber: Inventio AG, 6052 Hergiswil (CH)
(72) Erfinder: FELDER, Hugo, CH-6033 Buchrain (CH)
(74) Vertreter: Blöchle, Hans
(86) Internationale Anmeldenummer: PCT/EP2008/065894
(87) Internationale Veröffentlichungsnummer: WO 2009/065886

(56) Entgegenhaltungen:
- EP-A- 0 351 183
- EP-A- 0 846 820
- WO-A-01/79631
- WO-A-87/02736
- WO-A-94/10651
- DE-A1- 2 708 701
- DE-A1- 3 308 487
- DE-A1- 19 622 226
- DE-A1- 19 803 046
- DE-C1- 4 038 038
- DE-U1- 29 911 960
- US-A- 4 176 782
- US-A- 4 392 134
- US-A1- 2005 061 956
- US-B1- 6 318 137

## Beschreibung

Die Erfindung betrifft einen Schlüsselschalter gemäss dem Oberbegriff des Anspruchs 1, die zum Beispiel zum Einbau in eine Aufzugskabine einer Aufzugsanlage ausgelegt ist, sowie ein Verfahren, gemäss dem Oberbegriff des Anspruchs 14, zum Initialisieren einer Fahreinrichtung mittels eines solchen Schlüsselschalters.

Die DE 27 08 701 beschreibt eine Diebstahlsicherung für Kraftfahrzeuge, welche durch eine Anordnung von Öffnern und Schliessern, die im Anlasser oder in der elektrischen Benzinpumpe eingebaut sind, eine Betätigung des Anlassers bzw. der Benzinpumpe erst bei Schliessetellung der hintereinander geschalteten Öffner-Schliesser-Kombination ermöglicht.

Die US 4176782 offenbart einen berührungslos digitalen Schlüsselschalter mit einer Mehrzahl von Schaltkreisen, die eine vorbestimmte Anzahl von magnetischen Sensoren enthält. Dabei sind die magnetischen Sensoren longitudinal im Schlüsselschalter aneinander gereiht.

Die DE 3308487 A1 beschreibt ein Zylinderschloss. Während des Einschiebens eines Schlüssels in den Schlüsselkanal eines Zylinderschlosses werden die Zuhaltungsstifte entsprechend der Schlüsselzähnung auf- und ab bewegt, bis bei zur Gänze eingeschobenem Schlüssel die Öffnungslage der Zuhaltungsstifte erreicht ist. Die Summenbewegung mindestens eines Zuhaltungsstiftes wird während der Einschuobewegung mechanisch oder elektronisch gemessen und mit einem Sollwert verglichen, worauf bei Übereinstimmung eine Sperre des Zylinderkernes aufgehoben und bzw. oder ein Relais zum Einschalten oder Abschalten einer Alarmanlage betätigt wird. Der Schlüssel weist zwischen den Vertiefungen zur Positionierung der Zuhaltungsstifte Zacken auf, deren Höhe zur Bildung des Schlüsselcodes variiert wird.

Die WO 87/02736 beschreibt ein Schlüsselsystem, welches die mechanische Drehbewegung eines Schlüssels in einem Schlüsselloch in elektrische Signale umwandelt.

Die WO 01/79631 A beschreibt ein berührungslos abtastendes Schlüsselsystem mit Vergleichsmitteln.

Fahreinrichtung, wie Aufzugsanlagen, Fahrsteige und Fahrtreppen, sind häufig mit Schlüsselschaltern ausgestattet.

In einigen Ländern gibt es Vorschriften, die festlegen, dass eine Aufzugskabine im Notfall (zum Beispiel wenn es brennt) durch die Feuerwehr mittels eines Spezialschlüssels bedienbar sein muss. Die Aufzugsteuerung kann mit diesem Schlüssel z.B. in einen speziellen Modus (Notfallmodus) umgeschaltet werden.

Andere Fahreinrichtungen wiederum haben Schlüsselschalter, die von Servicepersonal betätigt werden, um vom Normalbetrieb in einen Servicemodus umschalten zu können.

Auch bekannt sind Fahreinrichtungen, die mittels Schlüsselschalter kontrolliert werden. So kann zum Beispiel das Erreichen einer Penthousewohnung mit dem Aufzug ermöglicht werden, falls vorher ein Schlüsselschalter mit dem entsprechenden Schlüssel betätigt wurde.

Die Schlüsselschalter sind oft sehr teuer, zumal häufig der Wunsch besteht, dass der Aufzug mit dem gleichen Schlüssel betätigt werden kann wie die Haustüre. Falls mehrere Personen einen Schlüssel benötigen, muss die gesamte Schlüsselanlage mittels Schliessplan entsprechend geplant und ausgelegt werden.

Es ist ein weiterer Nachteil der bisherigen derartigen Schlüsselschalter, dass die Aufzugsanlage durch die Verwendung identischer Schlüsselschalter an mehreren Stellen teuerer ist. Auch wenn die Aufzugsanlage umzurüsten ist, z.B. weil Schlüssel abhanden gekommen sind, müssen alle Schlüsselschalter durch identische neue ausgetauscht werden.

Müssen heute mehrere Funktionen durch Schlüsselschalter gesteuert werden können, muss pro Funktion ein Schlüsselschalter eingebaut werden, was sehr viel Platz erfordert. Neben den Kosten spielt auch ein anderer Punkt eine wichtige Rolle. Typischerweise haben die Schlüsselschalter einen Zylinder, der wegen der elektro-mechanischen Elemente eine gewisse Bautiefe hat. Eine Analyse vorhandener Schlüsselschalter hat ergeben, dass diese zwischen 50 und 60 mm (teilweise bis 90 mm) liegt. Speziell bei Fahreinrichtungen ist jedoch nur eine geringe Bautiefe vorhanden. Auch bei Lösungen, die ästhetischen Ansprüchen genügen müssen, ist die grosse Bautiefe eher störend.

Aufgabe der Erfindung ist es daher einen Schlüsselschalter bereit zu stellen, welcher günstiger in der Herstellung und flexibel einsetzbar ist und dessen Einbautiefe geringer ist als bei konventionellen Lösungen.

Trotzdem sollte eine mindestens gleichwertige Sicherheit geboten werden wie bei bisherigen Vorrichtungen. Ausserdem soll die Vorrichtung die entsprechenden lokalen Regeln und Vorschriften erfüllen.

Mit der Erfindung sollte auch eine zeitliche Einschränkung einer Freigabe für eine Funktion erreicht werden. Z.B. kann dem Reinigungspersonal nur von 16.00 Uhr bis 22.00 Uhr Zutritt gewährt werden.

Die Lösung der Aufgabe erfolgt durch die Merkmale des Anspruchs 1 und durch die Merkmale des Anspruchs 14.

Vorteilhafte Ausführungsbeispiele und Weiterbildungen der Erfindung sind durch die abhängigen Patentansprüche umschrieben.

Der erfindungsgemässe Schlüsselschalter zeichnet sich dadurch aus, dass er Schlüsselerkennungsmittel zum Erkennen eines Schlüssels mit Schlüsselbart und eine Schlüsselaufnahme zum Einstecken, Führen und Positionieren des Schlüsselbarts aufweist. Die Schlüsselerkennungsmittel arbeiten berührungslos und tasten mindestens einen Teil des in die Schlüsselaufnahme eingesteckten Schlüsselbarts ab. Die entsprechenden Abtastmittel liefern Istwerte eines Schlüssels, der momentan in der Schlüsselaufnahme steckt. Speichermittel sind vorhanden, um in einer Initialisierungsphase Vergleichswerte eines Schlüssels zu speichern. Ein elektronischer Vergleicher ist vorhanden, der Istwerte mit Vergleichswerten vergleicht und bei Übereinstimmung der Istwerte und Vergleichswerte eine Freigabe bewirkt.

Das erfindungsgemässe Verfahren zeichnet sich dadurch aus, dass zum Initialisieren einer Fahreinrichtung mittels eines Schlüsselschalters mit Schlüsselerkennungsmitteln zum Erkennen eines Schlüssels mit Schlüsselbart und mit einer Schlüsselaufnahme zum Einstecken des Schlüsselbarts in die Schlüsselaufnahme, folgende Schritte ausgeführt werden:
- Einstecken des Schlüsselbarts des Schlüssels in die Schlüsselaufnahme,
- berührungsloses Abtasten mindestens eines Teils des Schlüsselbarts und Bereitstellen eines Istwertes des Schlüssels, der momentan in der Schlüsselaufnahme steckt,
- Vergleichen des Istwertes mit einem oder mehreren Vergleichswerten, die in einem Speicher gespeichert sind,
- Bewirken einer Freigabe.

Dank der neuen Erfindung muss in der Kabine kein neuer Schlüsselschalter eingesetzt werden, wenn die Aufzugsanlage umzurüsten ist, da mit der neuen Erfindung nur ein neuer Schlüssel gespeichert werden kann.

Müssen mehrere Funktionen durch Schlüsselschalter gesteuert werden können, brauchen wir mit der Erfindung nur noch eine zentrale Einheit für alle Funktionen.

Als weiterer Vorteil werden heute gebräuchliche mechanische Schlossöffnungswerkzeuge (auch Einbruchswerkzeuge) wirkungslos, da ihre mechanische Form, Ausführung und Wirkungsweise vom erfindungsgemässen Schlüsselerkennungsmittel zuverlässig erkannt werden und keine Freigabe bewirken.

Weitere Einzelheiten und Vorteile der Erfindung werden im Folgenden an Hand von Ausführungsbeispielen und mit Bezug auf die Zeichnungen beschrieben. Es zeigen:
- Fig. 1: einen Teil eines Bedienpaneels mit erfindungsgemässem Schlüsselschalter, in einer vereinfachten, schematisierten Darstellung;
- Fig. 2: einen mechanischen Schlüssel mit Schlüsselbart;
- Fig. 3A: eine Draufsicht eines konventionellen Schlüsselzylinders;
- Fig. 3B: eine Seitenansicht des konventionellen Schlüsselzylinders nach Fig. 3A;
- Fig. 4A: eine Rückansicht eines erfindungsgemässen Schlüsselschalters;
- Fig. 4B: eine Seitenansicht des erfindungsgemässen Schlüsselschalters nach Fig. 4A;
- Fig. 4C: eine schematische Schnittansicht des erfindungsgemässen Schlüsselschalters nach Fig. 4A;
- Fig. 5: einen schematischen Ablauf eines erfindungsgemässen Verfahrens.

Es geht im Rahmen der vorliegenden Patentanmeldung, wie eingangs bereits angedeutet, um Schlüsselschalter, wie sie in Aufzugsanlagen, bei Rolltreppen oder Fahrsteigen zum Einsatz kommen. Als Schlüsselschalter wird ein System oder eine Einheit bezeichnet, die es einem bestimmten Personenkreis, zum Beispiel Mitarbeitern der Feuerwehr, Polizei, Mietern, oder dergleichen, ermöglicht, die Fahreinrichtung in einen gewünschten Modus (z.B. einen Notfallmodus) zu überführen, oder zum Beispiel eine Sonderfahrt auszulösen. Dazu wird ein mechanischer Schlüssel verwendet, der hier als Schlüssel bezeichnet wird. Die Erfindung lässt sich auch anwenden bei intelligenten Schlüsseln, solange bei diesen Schlüsseln ein Schlüsselbart vorhanden ist, der erkennbare Merkmale aufweist, die ihn von anderen Schlüsseln unterscheiden.

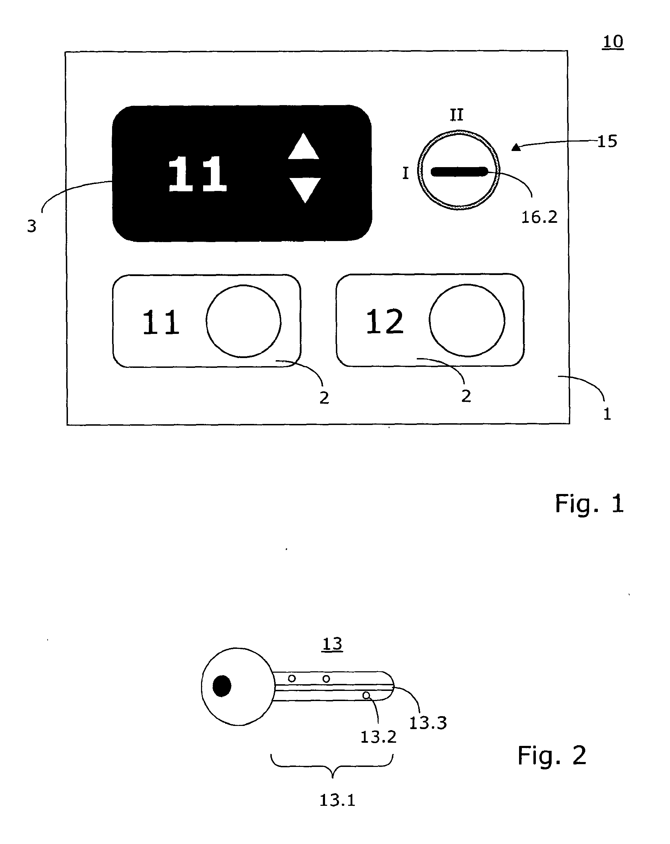

In Fig. 2 ist ein solcher Schlüssel 13 in einer vereinfachten Darstellung gezeigt. Es handelt sich gemäss Erfindung um mechanische Schlüssel 13 oder um intelligente Schlüssel (z.B. mit eingebautem Chip), die einen Schlüsselbart aufweisen, die so ausgestaltet sind, dass sie mechanisch mit Gegenelementen eines Schlüsselzylinders in Wechselwirkung treten, sobald der Bart 13.1 des Schlüssels 13 in eine Schlüsselaufnahme 16.2 des Schlüsselzylinders 16.3 gesteckt wird. Nur wenn der "richtige" Schlüssel 13 eingesteckt wird, kann eine Aktion ausgelöst werden. Das Auslösen einer Aktion wird hier generell als Freigabe bezeichnet, da eine Freigabe nur erfolgt wenn ein zugelassener Schlüssel 13 erkannt wurde. Ohne den richtigen Schlüssel erfolgt also keine Freigabe.

An dem Schlüsselbart 13.1 können mechanische Merkmale, z.B. kleine Senken 13.2 und/oder Nuten 13.3 vorgesehen sein. Der Schlüsselbart 13.1 kann aber auch, wie häufig üblich, eine oder zwei kammartige Kante(n) aufweisen.

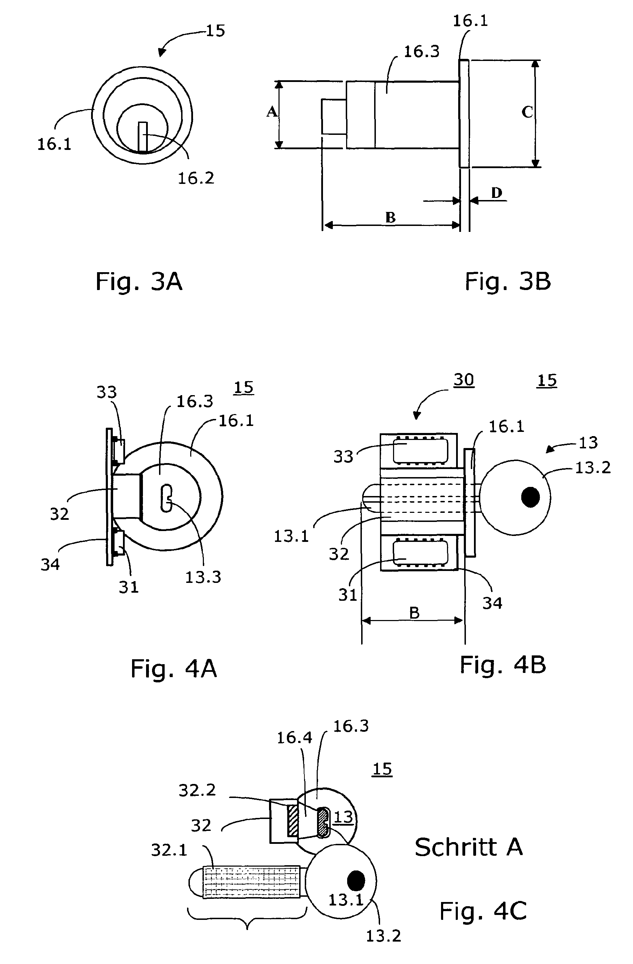

Details der Erfindung werden nun anhand eines Ausführungsbeispiels beschrieben, das in den Figuren 1 und 4A bis 4C gezeigt ist.

In Fig. 1 ist ein erfindungsgemässer Schlüsselschalter 15 als Teil eines Bedienpaneels 1 gezeigt. Der Schlüsselschalter 15 sitzt üblicherweise hinter einer Abdeckplatte des Bedienpaneels 1. Das Bedienpaneel 1 kann eine Reihe von Bedienelementen 2 aufweisen und mit einer Anzeige 3 ausgestattet sein.

Der Schlüsselschalter 15 kann aber auch an einem anderen Ort in einer Aufzugskabine und/oder ausserhalb der Aufzugskabine, z.B. neben Schachttüren, angeordnet sein.

Gemäss Erfindung ist in der Aufzugskabine ein Schlüsselschalter 15 angebracht, der Schlüsselerkennungsmittel zum Erkennen eines Schlüssels 13 mit Schlüsselbart 13.1 aufweist. Der Schlüsselschalter 15 umfasst eine Schlüsselaufnahme 16.2 zum Einstecken des Schlüsselbarts 13.1. Gemäss Erfindung arbeiten die Schlüsselerkennungsmittel 30 berührungslos und weisen aus diesem Grund entsprechende Abtastmittel 32 zum Abtasten mindestens eines Teils des in die Schlüsselaufnahme 16.2 eingesteckten Schlüsselbarts 13.1 auf. Die Abtastmittel 32 liefern Istwerte eines Schlüssels 13, der momentan in der Schlüsselaufnahme 16.2 steckt. Ein entsprechender Zustand ist in Fig. 4A und 4B gezeigt. Es sind Speichermittel 31 vorhanden, um in einer Initialisierungsphase Vergleichswerte eines Schlüssels 13 zu speichern. Weiterhin ist ein elektronischer Vergleicher 33 vorhanden, der Istwerte mit Vergleichswerten vergleicht und bei Übereinstimmung der Istwerte und Vergleichswerte eine Freigabe bewirkt.

In den Figuren 4A, 4B und 4C ist eine erste Ausführungsform der Erfindung gezeigt. Es handelt sich um eine vereinfachte Darstellung, um das Prinzip der Erfindung erläutern zu können.

Die Abbildungen 4A und 4B wurden so angeordnet, dass sie mit den Abbildungen 3A und 3B eines konventionellen Schlüsselschalters verglichen werden können. Aus diesem Vergleich kann man erkennen, dass der in Fig. 4B gezeigte Schlüsselschalter 15 eine deutlich geringere Einbautiefe B hat als der Schlüsselschalter in Fig. 3B. In den Figuren 4A, 4B und 4C wurde eine Anordnung der Elemente des Schlüsselschalters 15 gewählt, deren Bautiefe sogar etwas kürzer ist als die Länge des Schlüsselbarts 13.1. In Fig. 4B ist zu erkennen, dass der Schlüsselbart 13.1 den Schlüsselschalter 15 durchdringt und das Ende des Schlüsselbarts 13.1 heraus steht.

Im Folgenden werden die Elemente des erfindungsgemässen Schlüsselschalters 15 näher beschrieben. In Fig. 4B ist zu erkennen, dass der Schlüssel 13 von rechts durch eine Abdeckplatte 16.1 hindurch in den Schlüsselschalter 15 gesteckt wurde. Wie auch bei konventionellen Schlüsselschaltern, weist der neue Schlüsselschalter eine Art Schlüsselzylinder 16.3 oder Aufnahmekörper (im Folgenden der Einfachheit halber als Schlüsselzylinder bezeichnet) auf. Anders als bei einem konventionellen Schlüsselschalter umfasst dieser Schlüsselzylinder 16.3 aber keine eigentlichen mechanischen Schliessmittel. Da die Erfindung berührungslos arbeitet, wird der Schlüssel 13 einfach eingesteckt und muss nicht zwingend gedreht werden. Es kann aber auch sein, dass der Schlüssel drehbar ist, mit einer Drehung eines Schlüssels können mehrere Seiten des Schlüssels abgetastet werden, ohne den Detektionsaufwand zu vergrössern und somit die Sicherheit erhöht werden (kein Fotokopie eines Schlüssels möglich). Hier sei angemerkt, dass bei einer bevorzugten Ausführungsform neben der berührungslosen Erkennung des Schlüssels 13 aber auch eine einfache mechanische Erkennung vorgesehen sein kann, um nur gewisse Schlüsseltypen zuzulassen.

Der Schlüsselzylinder 16.3 weist ein Fenster 16.4 auf, das in Fig. 4C angedeutet ist. Der Begriff Fenster wird hier gewählt, um aufzuzeigen, dass zwischen einem Abtastmittel 32 und dem abzutastenden Teil des Schlüsselbarts 13.1 eine "Sicht- oder Wirkverbindung" besteht. Im Falle einer optischen Abtastung handelt es sich um ein (transparentes) Fenster mit definierten optischen Eigenschaften oder um eine Öffnung. Falls eine andere Form oder eine Kombination von verschiednen Formen der berührungslosen Abtastung erfolgt, wird das Fenster entsprechend anders ausgestaltet. Bei einer kapazitiven oder induktiven Abtastung z.B. kann das Fenster ein entsprechendes Material (z.B. dielektrisches Material) umfassen.

In den Figuren 4A bis 4C ist zu erkennen wie die einzelnen Elemente angeordnet sein können. Z.B. kann eine Platine 34 oder ein anderes Trägermaterial eingesetzt werden, um die elektronischen Komponenten der Schlüsselerkennungsmittel 30 aufzunehmen. In den Figuren 4A und 4B ist gezeigt, dass die Platine 34 neben dem Schlüsselzylinder 16.3 sitzt. Mittig befinden sich die eigentlichen Abtastmittel 32 zum Abtasten mindestens eines Teils des in die Schlüsselaufnahme 16.2 eingesteckten Schlüsselbarts 13.1. Die Abtastmittel 32 sind fest mit dem Schlüsselzylinder 16.3 verbunden und haben über das Fenster 16.4 Zugang zum abzutastenden Bereich des Schlüsselbarts 13.1. Auf der Platine 34 können auch die anderen Komponenten (z.B. ein Speicherchip, der als Speichermittel 31 dient und ein elektronischer Vergleicher 33) vorhanden sein. In Fig. 4A und 4B sind diese Komponenten in Form integrierter Schaltkreise (ICs) gezeigt. Es sind aber auch diskret aufgebaute oder komplett in ein IC integrierte Lösungen möglich.

In Fig. 4A ist zu erkennen, dass der Schlüsselzylinder 16.3 links eine Abflachung (Sekante durch den Kreisumfang des Schlüsselzylinders 16.3) aufweist. Im Bereich dieser Abflachung ist das Abtastmittel 32 befestigt oder angeordnet. In Fig. 4C ist gezeigt, dass sich das Fenster 16.4 von der abgeflachten Seite des Schlüsselzylinders 16.3 zu dem Bereich hin erstreckt, wo sich der Schlüsselbart 13.1 befindet.

Fig. 4C deutet an, dass innerhalb des Abtastmittels 32 z.B. ein Kameraelement (optisches Detektionselement) 32.1 (z.B. ein CCD Chip) sitzen kann. Dieses Kameraelement 32.1 erzeugt ein Abbild bzw. eine Aufnahme des abzutastenden Bereichs des Schlüsselbarts 13.1. Die entsprechenden Signale oder digitalen Werte, die von dem Kameraelement 32.1 bereit gestellt werden, werden hier als allgemein als Istwerte bezeichnet. Diese Istwerte können über Kabel oder andere Verbindung an den elektronische Vergleicher 33 übergeben werden, der diesen Istwert mit einem oder mehreren Vergleichswerten vergleicht, die in dem Speichermittel 31 gespeichert sind. Bei einer Übereinstimmung des Istwerts mit einem der Vergleichswerte wird von den Schlüsselerkennungsmittel 30 eine Freigabe bewirkt. Es kann durch diese Freigabe zum Beispiel eine Sonderfahrt (z.B. zu einem geschützten Bürobereich) oder ein Notfallmodus ausgelöst werden.

Um die Schlüsselerkennungsmittel 30 für den Einsatz vorzubereiten, wird in einer sogenannten Initialisierungsphase mindesten der Vergleichswert eines Schlüssels 13 vorgegeben und gespeichert. Nur wenn nach der Initialisierungsphase derselbe Schlüssel 13 oder eine Kopie dieses Schlüssels 13 verwendet wird, erfolgt nach dem Abtasten und Vergleichen eine Freigabe.

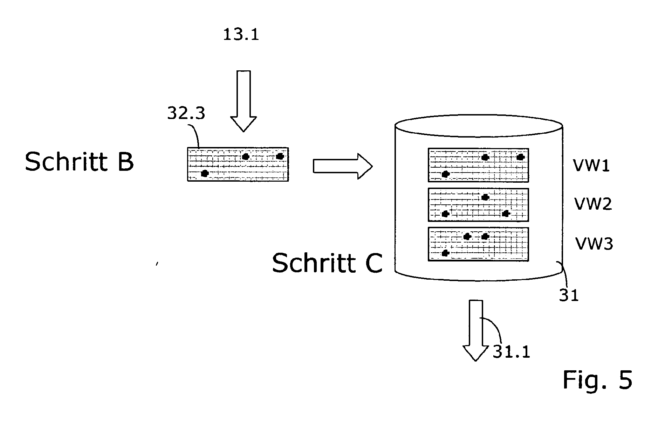

Das erfindungsgemässe Prinzip des berührungslosen Abtastens (Erkennens) eines Schlüssels 13 ist in Fig. 5 anhanden eines Ausführungsbeispiels beschrieben, das mit einem CCD Chip als Kameraelement 32.1 arbeitet. Schritt A zeigt den Schlüssel und das Pixelfeld des Kameraelements 32.1 mit einer grossen Anzahl von in Reihen und Spalten angeordneten Pixeln. Das Kameraelement 32.1 nimmt nun ein elektronisches (digitales) Abbild 32.3 des Schlüsselbarts 13.1. Dieses Abbild ist in Fig. 5 als Schritt B gezeigt. Im Abbild sind drei schwarz eingefärbte Bereiche zu erkennen, die der Position und Grösse der Senken 13.2 des Schlüsselbarts 13.1 entsprechen. Rechts unten in Fig. 5 ist das Speichermittel 31 schematisch angedeutet. Im gezeigten Beispiel wurden in der Initialisierungsphase die Abbildungen (Vergleichswerte VW1 bis VW3) von drei Schlüsseln vorgegeben. In Schritt C erfolgt ein Vergleich des Abbilds 32.3 mit den gespeicherten Vergleichswerten VW1 bis VW3. Da VW1 dem gegenwärtigen Istwert (Abbild 32.3) entspricht, erfolgt eine Freigabe, wie durch den Pfeil 31.1 angedeutet.

Die Erfindung funktioniert aber auch mit Abtastmitteln, die das Abbild (Istwert) Punkt für Punkt oder schrittweise erzeugen. Z.B. kann eine Leuchtdiode oder ein Laser eingesetzt werden, der Licht auf den Schlüsselbart 13.1 lenkt, das dann nach einer Reflexion von einem Detektor aufgenommen wird. Das Funktionsprinzip bleibt jedoch gleich.

In einer besonders bevorzugten Ausführungsform wird mit einem bild- oder mustervergleichenden Algorithmus gearbeitet.

Die Freigabe wird von den Schlüsselerkennungsmitteln 30 bewirkt indem ein elektrischer Impuls abgegeben wird, oder indem z.B. eine digitale "1" oder eine digitale "0" ausgegeben wird. Dieser Impuls oder dieser digitale Wert kann z.B. von einem anderen Bauteil einer Aufzugssteuerung erkannt und weiterverarbeitet werden.
Die Schlüsselerkennungsmittel 30 können initialisiert werden. Die Initialisierung kann im Werk erfolgen, oder sie kann vor Ort vorgenommen werden. In der Initialisierungsphase werden Vergleichswerte VW1 - VW3 eines oder mehrerer Schlüssel 13 gespeichert. Diese Vergleichswerte VW1 - VW3 sind im Speicher 31 angelegt.

Vorzugsweise gibt es Möglichkeiten, um Vergleichswerte zu löschen oder zu editieren, oder um neue Vergleichswerte hinzu zu fügen. Um diese Änderungen zu schützen, kann eine spezielle Authentifizierung vorgesehen werden. Bei der Authentifizierung (in einer Authentifizierungsphase) wird z.B. ein Masterschlüssel nach dem Einstecken in die Schlüsselaufnahme 16.2 abgetastet. Der entsprechende Vergleichswert VW* des Masterschlüssels kann in einem geschützten (nur einmal beschreibbaren) Speicherbereich abgelegt werden. Nur wenn das Abbild des Masterschlüssels erkannt wird, kann man in einen Änderungsmodus (Verwaltungsmodus) wechseln. Es kann der Eintritt in den Änderungsmodus (Verwaltungsmodus) aber auch durch die manuelle Eingabe eines Codes über das Bedienpanel 10 ermöglicht werden. Alternativ oder zusätzlich kann das Einlesen einer Chipkarte vorgesehen sein, um eine Authentifizierung vorzunehmen.

Weichen die Vergleichswerte in einem definierten Toleranzbereich vom Abbild ab, können durch adaptive Korrektur der Vergleichswerte die natürliche Abnützung oder Alterung des abgetasteten Schlüsselbartes ausgeglichen werden, ohne die Zuverlässigkeit und Sicherheit des Systems zu vermindern.

Die Erfindung bietet zahlreiche Vorteile, die sich aus der Beschreibung ergeben. Besonders erwähnenswert ist die Tatsache, dass die Bautiefe deutlich kleiner sein kann, als bei konventionellen Schlüsselschaltern. Ausserdem bietet die Erfindung zahlreiche Möglichkeit der Anpassung an die jeweilige Situation vor Ort. Es können einfach weitere Schlüssel abgetastet und damit zugelassen werden. Schlüssel, die abhanden gekommen sind, können einfach aus dem Speicher gelöscht werden.

Auch ist es problemlos möglich, Schlüssel verschiedener Hersteller und verschiedener Bauart im Schlüsselerkennungsmittel 30 anzumelden und damit eine Bedienung der Schlüsselerkennungsmittel 30 mit diesen Schlüsseln zu ermöglichen. So kann z.B. ein Mieter eines Hauses seinen Garagenschlüssel registrieren, um in Zukunft einen Aufzug mit dem Garagenschlüssel zu bedienen. Ein anderer Bewohner desselben Hauses kann z.B. seinen Haustürschlüssel registrieren und verwenden.

Die gezeigte Lösung ist deutlich günstiger und flexibler als bisher bekannte Lösungen, da nur eine Einrichtung für mehrere Schliessmittel/Funktionen eingesetzt werden kann und nicht pro Funktion ein Schliesszylinder. Auch selbst hergestellte Schlüssel können erfasst und gespeichert werden.

Die Sicherheitsstufe kann beliebig erhöht werden, wenn zum Beispiel um eine Funktion auszulösen, mehrere Schlüssel in einer bestimmten (oder nicht bestimmten) Reihenfolge eingelesen werden müssen. Z.B. Freigabe um in die Penthouse Wohnung zu gelangen: 1. Autoschlüssel = Freigabe, 2. Wohnungsschlüssel = Rufeingabe etc.

## Patentansprüche

1. Schlüsselschalter (15) für Fahreinrichtung mit Schlüsselerkennungsmittel zum Erkennen eines Schlüssels (13) mit Schlüsselbart (13.1) und mit einer Schlüsselaufnahme (16.2) zum Einstecken des Schlüsselbarts (13.1) in die Schlüsselaufnahme (16.2), wobei
- die Schlüsselerkennungsmittel (30) berührungslos arbeitende Abtastmittel (32) zum Abtasten mindestens eines Teils des in die Schlüsselaufnahme (16.2) eingesteckten Schlüsselbarts (13.1) umfasst, wobei die Abtastmittel (32) Istwerte eines Schlüssels (13) liefern, der momentan in der Schlüsselaufnahme (16.2) steckt,
- Speichermittel (31) vorhanden sind, um in einer Initialisierungsphase Vergleichswerte eines Schlüssels (13) zu speichern,
- ein elektronischer Vergleicher (33) vorhanden ist, der Istwerte mit Vergleichswerten vergleicht und bei Übereinstimmung der Istwerte und Vergleichswerte eine Freigabe bewirkt,
**dadurch gekennzeichnet, dass**:
- der Schlüsselbart (13.1) den Schlüsselschalter (15) durchdringt und das Ende des Schlüsselbarts (13.1) heraus steht.

2. Schlüsselschalter (15) nach Anspruch 1, **dadurch gekennzeichnet, dass** die Abtastmittel (32) im Bereich der Schlüsselaufnahme (16.2) angeordnet sind und ein (oder mehrere) wirksames Fenster (16.4) aufweisen, in dem der Teil des in die Schlüsselaufnahme (16.2) eingesteckten Schlüsselbarts (13.1) für die Abtastmittel (32) abtastbar ist, vorzugsweise berührungslos und verschleissfrei.

3. Schlüsselschalter (15) nach Anspruch 1, **dadurch gekennzeichnet, dass** die Abtastmittel (32) den Teil des in
die Schlüsselaufnahme (16.2) eingesteckten Schlüsselbarts (13.1) schrittweise abtasten.

4. Schlüsselschalter (15) nach Anspruch 3, **dadurch gekennzeichnet, dass** ein optischer Scanner als Abtastmittel (32) dient.

5. Schlüsselschalter (15) nach Anspruch 4, **dadurch gekennzeichnet, dass** der optische Scanner eine Lichtquelle, vorzugsweise einen Miniaturlaser, und einen Lichtdetektor umfasst.

6. Schlüsselschalter (15) nach Anspruch 1, **dadurch gekennzeichnet, dass** die Abtastmittel (32) den Teil des in die Schlüsselaufnahme (16-2) eingesteckten Schlüsselbarts (13.1) gesamthaft aufzeichnen.

7. Schlüsselschalter (15) nach Anspruch 6, **dadurch gekennzeichnet, dass** ein optisches CCD-Element als Abtastmittel (32) dient.

8. Schlüsselschalter (15) nach einem der vorherigen Ansprüche, **dadurch gekennzeichnet, dass** sie ein Bedienpanel (10) mit mindestens einem Eingabemittel (2) und mindestens einer Anzeige (3) umfasst.

9. Schlüsselschalter (15) nach Anspruch 8, **dadurch gekennzeichnet, dass** die Schlüsselschalter (15) mittels der Eingabemittel (2) in einen Initialisierungsmodus überführbar ist, der in einer Initialisierungsphase Vergleichswerte eines Schlüssels (13) erfasst und in dem Speichermittel (31) speichert.

10. Schlüsselschalter (15) nach einem der vorherigen Ansprüche, **dadurch gekennzeichnet, dass** dieser programmierbar ist, wobei ein Wechsel in einen Programmiermodus nur nach einer Authentifizierungsphase erfolgt.

11. Schlüsselschalter (15) nach Anspruch 8, **dadurch gekennzeichnet, dass** während der Authentifizierungsphase des Einsteckens eines Masterschlüssels in die Schlüsselaufnahme (16.2) oder das manuelle Eingeben eines Codes über ein Bedienpanel (10) erfolgt.

12. Schlüsselschalter (15) nach einem der vorherigen Ansprüche, **dadurch gekennzeichnet, dass** die Speichermittel (31) so organisiert sind, dass Vergleichswerte mehrerer Schlüssel (13) speicherbar sind, und dass der Vergleicher (33) aus einer Anzahl von gespeicherten Vergleichswerten ermittelt, ob eine Übereinstimmung der Istwerte mit einem der Vergleichswerte gegeben ist, z.B. mit adaptiver Vergleichswertkorrektur.

13. Schlüsselschalter (15) nach einem der vorherigen Ansprüche, **dadurch gekennzeichnet, dass** dieser in eine Aufzugsanlage oder eine Fahrtreppe integriert ist, um nach erfolgter Freigabe eine Aktion auszulösen.

14. Verfahren zum Bedienen einer Fahreinrichtung mittels eines Schlüsselschalters (15) mit Schlüsselerkennungsmitteln (30) zum Erkennen eines Schlüssels (13) mit Schlüsselbart (13.1) und mit einer Schlüsselaufnahme (16.2) zum Einstecken des Schlüsselbarts (13.1) in die Schlüsselaufnahme (16.2), **gekennzeichnet durch** die folgenden Schritte:
- Einstecken des Schlüsselbarts (13.1) des Schlüssels (13) in die Schlüsselaufnahme (16.2), wobei der Schlüsselbart (13.1) den Schlüsselschalter (15) durchdringt und das Ende des Schlüsselbarts (13.1) heraus steht,
- berührungsloses Abtasten mindestens eines Teils des Schlüsselbarts (13.1) und Bereitstellen eines Istwertes (32.3) des Schlüssels (13), der momentan in der Schlüsselaufnahme (16.2) steckt,
- Vergleichen des Istwertes (32.3) mit einem oder mehreren Vergleichswerten (VW1 - VW3), die in einem Speicher (31) gespeichert sind,
- Bewirken einer Freigabe (31.1).

15. Verfahren nach Anspruch 14, **dadurch gekennzeichnet, dass** der Teil des Schlüsselbarts (13.1) optisch mittels eines Abtastmittels (32) abgetastet wird, wobei die Abtastung schrittweise oder in einem Schritt erfolgt.

16. Verfahren nach Anspruch 14 oder 15, **gekennzeichnet durch** den folgenden Schritt: Initialisieren der Schlüsselerkennungsmittel (30) in einer Initialisierungsphase, wobei in dieser Initialisierungsphase Vergleichswerte (VM1 - VW3) eines Schlüssels (13) gespeichert werden.

17. Verfahren nach Anspruch 14 oder 15, **gekennzeichnet durch** den folgenden Schritt: authentifizieren eines Schlüssels (13) in einer Authentifizierungsphase, wobei entweder ein Masterschlüssel nach dem Einstecken in die Schlüsselaufnahme (16.2) abgetastet und erkannt wird, oder wobei eine manuelle Eingabe eines Codes über ein Bedienpanel (10) erfolgt und die Eingabe ausgewertet wird.

## Claims

1. A key switch (15) for a travel equipment, having key recognition means for recognizing a key (13) with a key bit (13.1) and having a key receptacle (16.2) for insertion of the key bit (13.1) into the key receptacle (16.2), wherein
- the key recognition means (30) comprises contactlessly operating scanning means (32) for scanning at least a part of the key bit (13.1) inserted into the key receptacle (16.2), the scanning means (32) providing actual values for a key (13) currently inserted in the key receptacle (16.2),
- memory means (31) are present in order to store comparison values for a key (13) in an initialization phase and
- an electronic comparator (33) is present, which comparator compares actual values with comparison values and effects release if the actual values and comparison values match,
**characterised in that**
- the key bit (13.1) penetrates the key switch (15) and the end of the key bit (13.1) protrudes.

2. Key switch (15) as claimed in claim 1, **characterized in that** the scanning means (32) are arranged in the region of the key receptacle (16.2) and have at least one active window (16.4) in which the part of the key bit (13.1) inserted into the key receptacle (16.2) can be scanned by the scanning means (32), preferably contactlessly and in wear-free manner.

3. Key switch (15) as claimed in claim 1, **characterized in that** the scanning means (32) scan, in steps, the part of the key bit (13.1) inserted into the key receptacle (16.2).

4. Key switch (15) as claimed in claim 3, **characterized in that** an optical scanner is used as the scanning means (32).

5. Key switch (15) as claimed in claim 4, **characterized in that** the optical scanner comprises a light source, preferably a miniature laser, and a light detector.

6. Key switch (15) as claimed in claim 1, **characterized in that** the scanning means (32) record, as whole, the part of the key bit (13.1) inserted into the key receptacle (16.2).

7. Key switch (15) as claimed in claim 6, **characterized in that** an optical CCD element is used as the scanning means (32).

8. Key switch (15) as claimed in one of the preceding claims, **characterized in that** it comprises a control panel (10) having at least one input means (2) and at least one display (3).

9. Key switch (15) as claimed in claim 8, **characterized in that** the key switch (15) can be transferred by way of the input means (2) into an initialization mode which in an initialization phase detects comparison values for a key (13) and stores them in the memory means (31).

10. Key switch (15) as claimed in one of the preceding claims, **characterized in that** it is programmable, a change into a programming mode taking place only after an authentication phase.

11. Key switch (15) as claimed in claim 8, **characterized in that** a master key is inserted into the key receptacle (16.2) or a code is manually input via a control panel (10) during the authentication phase.

12. Key switch (15) as claimed in one of the preceding claims, **characterized in that** the memory means (31) are organized in such a manner that comparison values for a plurality of keys (13) can be stored, and **in that** the comparator (33) determines from a number of stored comparison values to determine whether the actual values match one of the comparison values, for example with adaptive comparison value correction.

13. Key switch (15) as claimed in one of the preceding claims, **characterized in that** it is integrated in an elevator system or an escalator in order to trigger an action following release.

14. A method for operating travel equipment by means of a key switch (15) having key recognition means (30) for recognizing a key (13) with a key bit (13.1) and having a key receptacle (16.2) for insertion of the key bit (13.1) into the key receptacle (16.2), **characterized by** the following steps:
- the key bit (13.1) of the key (13) is inserted into the key receptacle (16.2), wherein the key bit (13.1) penetrates the key switch (15) and the end of the key bit (13.1) protrudes,
- at least a part of the key bit (13.1) is contactlessly scanned and an actual value (32.3) is provided for the key (13) currently inserted in the key receptacle (16.2),
- the actual value (32.3) is compared with one or more comparison values (VW1 - VW3) stored in a memory (31) and
- release (31.1) is effected.

15. Method as claimed in claim 14, **characterized in that** the part of the key bit (13.1) is optically scanned by way of a scanning means (32), the scanning being carried out in steps or in one step.

16. Method as claimed in claim 14 or 15, **characterized by** the following step:
the key recognition means (30) are initialized in an initialization phase, comparison values (VW1 - VW3) for a key (13) being stored in this initialization phase.

17. Method as claimed in claim 14 or 15, **characterized by** the following step: a key (13) is authenticated in an authentication phase, either a master key being scanned and recognized after insertion into the key receptacle (16.2) or a code being manually input via a control panel (10) and the input being evaluated.

## Revendications

1. Interrupteur à clé (15) pour dispositif de transport avec un moyen de reconnaissance de clé pour reconnaître une clé (13) avec un panneton (13.1), et avec une entrée de clé (16.2) pour l'introduction du panneton (13.1), étant précisé
- que le moyen de reconnaissance de clé (30) comprend des moyens d'exploration (32) qui travaillent sans contact pour explorer une partie au moins du panneton (13.1) introduit dans l'entrée de clé (16.2), les moyens d'exploration (32) fournissant des valeurs réelles d'une clé (13) qui se trouve momentanément dans l'entrée de clé (16.2),
- qu'il est prévu des moyens de mémorisation (31) pour mettre en mémoire, lors d'une phase d'initialisation, des valeurs comparatives d'une clé (13),
- qu'il est prévu un comparateur électronique (33) qui compare les valeurs réelles à des valeurs comparatives et qui, si les valeurs réelles et les valeurs comparatives concordent, provoque une validation,
**caractérisé**
- **en ce que** le panneton (13.1) traverse l'interrupteur à clé (15), et l'extrémité du panneton (13.1) dépasse.

2. Interrupteur à clé (15) selon la revendication 1, **caractérisé en ce que** les moyens d'exploration (32) sont disposés dans la zone de l'entrée de clé (16.2) et présentent une (ou plusieurs) fenêtre active (16.4) dans laquelle la partie du panneton (13.1) pour les moyens d'exploration (32) qui est introduite dans l'entrée de clé (16.2) est apte à être explorée, de préférence sans contact et sans usure.

3. Interrupteur à clé (15) selon la revendication 1, **caractérisé en ce que** les moyens d'exploration (32) explorent progressivement la partie du panneton (13.1) introduite dans l'entrée de clé (16.2).

4. Interrupteur à clé (15) selon la revendication 3, **caractérisé en ce qu'**un scanner optique sert de moyen d'exploration (32).

5. Interrupteur à clé (15) selon la revendication 4, **caractérisé en ce que** le scanner optique comprend une source lumineuse, de préférence un laser miniature, et un détecteur de lumière.

6. Interrupteur à clé (15) selon la revendication 1, **caractérisé en ce que** les moyens d'exploration (32) enregistrent l'ensemble de la partie du panneton (13.1) introduit dans l'entrée de clé (16.2).

7. Interrupteur à clé (15) selon la revendication 6, **caractérisé en ce qu'**un élément CCD optique sert de moyen d'exploration (32).

8. Interrupteur à clé (15) selon l'une des revendications précédentes, **caractérisé en ce qu'**il comprend un tableau de commande (10) avec au moins un moyen d'entrée (2) et au moins un affichage (3).

9. Interrupteur à clé (15) selon la revendication 8, **caractérisé en ce qu'**il est apte à passer à l'aide des moyens d'entrée (2) dans un mode d'initialisation qui, lors d'une phase d'initialisation, détermine des valeurs comparatives d'une clé (13) et les met en mémoire dans les moyens de mémorisation (31).

10. Interrupteur à clé (15) selon l'une des revendications précédentes, **caractérisé en ce qu'**il est programmable, étant précisé qu'un passage à un mode de programmation se fait seulement après une phase d'authentification.

11. Interrupteur à clé (15) selon la revendication 8, **caractérisé en ce que** pendant la phase d'authentification a lieu l'introduction d'un modèle de clé dans l'entrée de clé (16.2) ou l'entrée manuelle d'un code par l'intermédiaire d'un tableau de commande (10).

12. Interrupteur à clé (15) selon l'une des revendications précédentes, **caractérisé en ce que** les moyens de mémorisation (31) sont organisés pour que des valeurs comparatives de plusieurs clés (13) puissent être mises en mémoire, et **en ce que** le comparateur (33) détermine, à partir d'un certain nombre de valeurs comparatives mises en mémoire, s'il y a une concordance entre les valeurs réelles et l'une des valeurs comparatives, par exemple avec une correction adaptative de valeurs comparatives.

13. Interrupteur à clé (15) selon l'une des revendications précédentes, **caractérisé en ce qu'**il est intégré à une installation d'ascenseur ou à un escalier roulant afin de déclencher une action après validation.

14. Procédé pour commander un dispositif de transport à l'aide d'un interrupteur à clé (15) avec des moyens de reconnaissance de clé (30) pour reconnaître une clé (13) avec un panneton (13.1), et avec une entrée de clé (16.2) pour l'introduction du panneton (13.1), **caractérisé par** les étapes suivantes :
- introduction du panneton (13.1) de la clé (13) dans l'entrée de clé (16.2), le panneton (13.1) traversant l'interrupteur à clé (15), et l'extrémité dudit panneton (13.1) dépassant,
- exploration, sans contact, d'une partie au moins du panneton (13.1) et fourniture d'une valeur réelle (32.3) de la clé (13) qui se trouve momentanément dans l'entrée de clé (16.2),
- comparaison de la valeur réelle (32.3) avec une ou plusieurs valeurs comparatives (VW1-VW3) qui sont mémorisées dans une mémoire (31),
- validation (31.1).

15. Procédé selon la revendication 14, **caractérisé en ce que** la partie du panneton (13.1) est explorée optiquement à l'aide d'un moyen d'exploration (32), l'exploration se faisant progressivement ou en une seule étape.

16. Procédé selon la revendication 14 ou 15, **caractérisé par** l'étape suivante :
initialisation des moyens de reconnaissance de clé (30) lors d'une phase d'initialisation, étant précisé que lors de cette phase d'initialisation, des valeurs comparatives (VW1-VW3) d'une clé (13) sont mises en mémoire.

17. Procédé selon la revendication 14 ou 15, **caractérisé par** l'étape suivante :
authentification d'une clé (13) lors d'une phase d'authentification, étant précisé que soit un modèle de clé est exploré et reconnu après son introduction dans l'entrée de clé (162), soit une entrée manuelle d'un code a lieu par l'intermédiaire d'un tableau de commande (10) et cette entrée est analysée.
